# EUROPEAN PATENT APPLICATION

(11) **EP 3 168 702 A1**
(43) Date of publication of application: **17.05.2017**
(21) Application number: 16195238.7
(22) Date of filing: 24.10.2016
(51) Int. Cl.: G05B 19/418, B29C 67/00, B33Y 50/02, G05B 19/401

(54) **ADDITIVE MANUFACTURING QUALITY CONTROL SYSTEMS**

(30) Priority: 12.11.2015 US 201514939284
(71) Applicant: Hamilton Sundstrand Corporation, Charlotte, NC 28217 (US)
(72) Inventor: GIULIETTI, Diana, Tariffville, CT Connecticut 06081 (US); VERSLUYS, Kiley J., Hartford, CT Connecticut 06103 (US)
(74) Representative: Stevens, Jason Paul

(57) **Abstract**

A method 100 includes receiving 101 an image from an optical imaging device (207) disposed in operative communication with an additive manufacturing machine (200), wherein the image includes at least part of a build area (205) of the additive manufacturing machine, determining (103) a reflectance of at least a portion of the build area based on the image to create reflectance data, and determining (105) a quality of one or more of an additive manufacturing process and/or product based on the reflectance data. The method can further include converting the image to greyscale if the image is not in greyscale.

## Description

### BACKGROUND

### 1. Field

The present disclosure relates to additive manufacturing, more specifically to quality control for additive manufacturing devices and processes.

### 2. Description of Related Art

In certain cases, powder bed fusion machines can experience incomplete recoats. Also, powder bed fusion machines can cause build abnormalities like burn, porosity, or incomplete sinter. Traditional systems to monitor recoat quality and/or build abnormalities are highly expensive and complex.

Such conventional methods and systems have generally been considered satisfactory for their intended purpose. However, there is still a need in the art for improved additive manufacturing quality control systems. The present disclosure provides a solution for this need.

### SUMMARY

A method includes receiving an image from an optical imaging device disposed in operative communication with an additive manufacturing machine, wherein the image includes at least part of a build area of the additive manufacturing machine, determining a reflectance of at least a portion the build area based on the image to create reflectance data, and determining a quality of one or more of an additive manufacturing process and/or product based on the reflectance data. The method can further include converting the image to greyscale if the image is not in greyscale.

Determining the reflectance can include determining a contrast or darkness of at least a portion of the build area in the image. Determining the reflectance can include determining the contrast or darkness for discrete pixels or groups of pixels of the image. Determining the reflectance can include assigning a reflectance value to each pixel or each groups of pixels based on the contrast or darkness thereof to create the reflectance data.

Determining the quality can include comparing the reflectance data with reference data to determine whether the reflectance data is within a predetermined range of the reference data. Determining the quality can include determining if a powder recoat on the build area is incomplete. In certain embodiments, the method can further include one or more of alerting a user or causing the additive manufacturing machine to recoat the build area.

Determining the quality includes determining if an additively manufactured product includes one or more of burned material, excessive porosity, missing portions, or is not shaped properly. In certain embodiments, determining the quality includes correlating the reflectance data with reference build location data for the additively manufactured product.

A system can include an optical device and a controller configured to control an additive manufacturing process and to execute non-transitory computer readable instructions stored on a memory thereof, the computer readable instructions including a method as described above.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a flow chart of an embodiment of a method in accordance with this disclosure;
Fig. 2 is a perspective view of an embodiment of a system in accordance with this disclosure;
Fig. 3 is a schematic view of relative contrast/darkness differences and assigned reflectance values therefor;
Fig. 4 is a plan view of an embodiment of an image of a build area, showing an incomplete recoat scenario; and
Fig. 5 is a plan view of an embodiment of an image of a build area, showing a missing sinter scenario, a weld burn scenario, a porosity scenario, and a geometric mismatch scenario.

### DETAILED DESCRIPTION

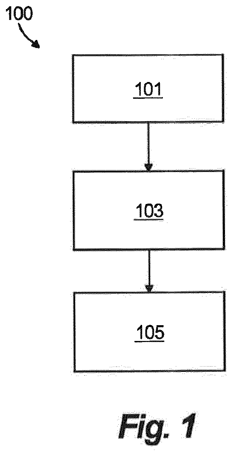

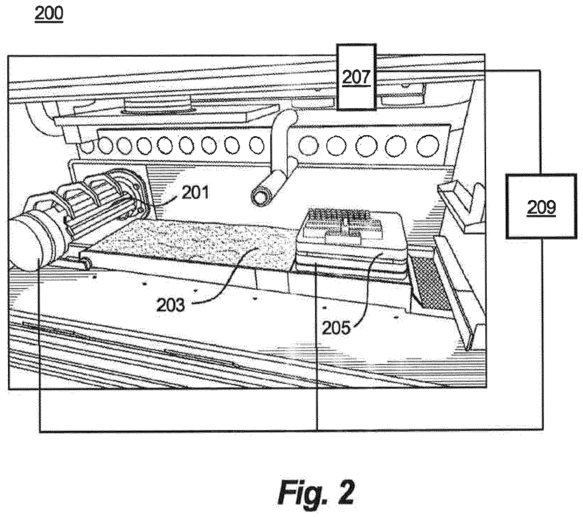

Reference will now be made to the drawings wherein like reference numerals identify similar structural features or aspects of the subject disclosure. For purposes of explanation and illustration, and not limitation, an illustrative view of an embodiment of a method in accordance with the disclosure is shown in Fig. 1 and is designated generally by reference character 100. Other embodiments and/or aspects of this disclosure are shown in Figs. 2 to 5. The systems and methods described herein can be used to monitor a quality in real time or after the fact of an additive manufacturing process and/or product thereof.

Referring to Figs. 1 and 2, a method 100 includes receiving an image 101 from an optical imaging device 207 disposed in operative communication with an additive manufacturing machine 200. The additive manufacturing machine 200 includes a build area 205 (shown as a piston actuated build platform in a fully lifted position). In certain embodiments, the additive manufacturing machine 200 can also include a powder bed 203 and recoater assembly 201 for coating the build area 205 with powder from the powder bed 203.

The received image includes at least part of the build area 205 of the additive manufacturing machine 200. The optical imaging device 207 can include one or more of a visible light camera, an infrared camera, or any other suitable imaging device. Regardless of the type of camera used to create a representation of the build area 205, the method 100 can further include converting the image to greyscale if the image is not in greyscale (e.g., a coloured visible light image).

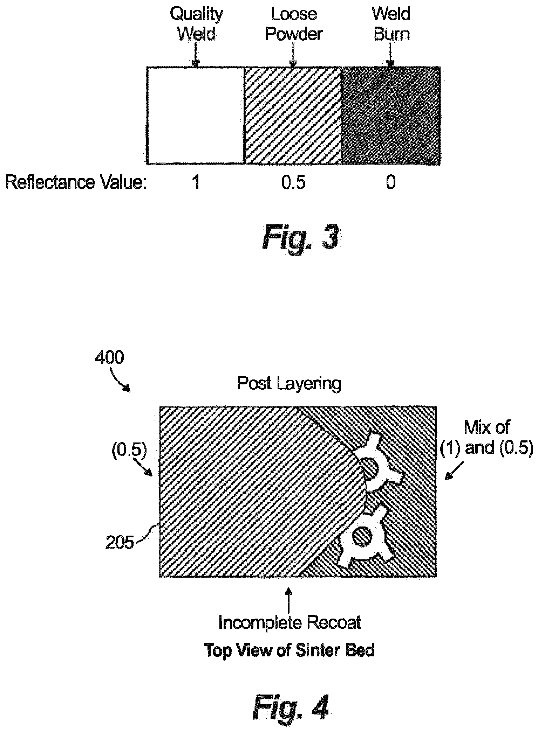

The method 100 further includes determining a reflectance 103 of at least a portion the build area 205 based on the image to create reflectance data. For example, referring additionally to Figs. 3 to 5, determining the reflectance 103 can include determining a contrast or darkness of at least a portion of the build area 205 in the image.

In certain embodiments, determining the reflectance 103 can include determining the contrast or darkness for discrete pixels or groups of pixels of the image. It is contemplated that any suitable area of the image can have an average reflectance determined of a group of pixels and/or portions of pixels.

Determining the reflectance 103 can include assigning a reflectance value to each pixel or each groups of pixels based on the contrast or darkness thereof to create the reflectance data. For example, referring to Fig. 3, an example determination of contrast or darkness is shown with assigned reference values. As shown, a low contrast/darkness range can indicate a quality weld which can be assigned a value of 1, for example. A medium range of contrast/darkness can indicate loose powder or high porosity, for example, and can be assigned a value of 0.5. A high range of contrast/darkness can indicate a burned weld, for example, and can be assigned a value of 0.

The method 100 can further include determining a quality 105 of one or more of an additive manufacturing process and/or product based on the reflectance data. Determining the quality 105 can include comparing the reflectance data with reference data to determine whether the reflectance data is within a predetermined range of the reference data. For example, reference data can include one or more of an average reflectance value of the build area 205, local maximum/minimum values, statistical frequencies of certain reflectance values, and/or gradient values for a particular additive manufacturing process/product at one or more portions of said process. An image taken of the same portion of such a process can then have similar values calculated and be compared to the reference data.

In certain embodiments, referring to Fig. 4, determining the quality 105 can include determining if a powder recoat on the build area 205 is incomplete. For example, a properly recoated build area 205 should have a consistent reflectance (e.g., contrast that indicates loose powder) across the entire build area. Therefore, if predetermined portion of the build area 205 in the image has a reflectance value that indicates quality weld (e.g., value 1) or burn (e.g., value 0) (e.g., as shown in image 400), then it can be determined that a powder recoat was incomplete because at least a portion of the product is exposed.

In certain embodiments, the method can further include one or more of alerting a user (e.g., via an audible and/or visual alarm). The method can additionally or alternatively include causing the additive manufacturing machine to recoat the build area.

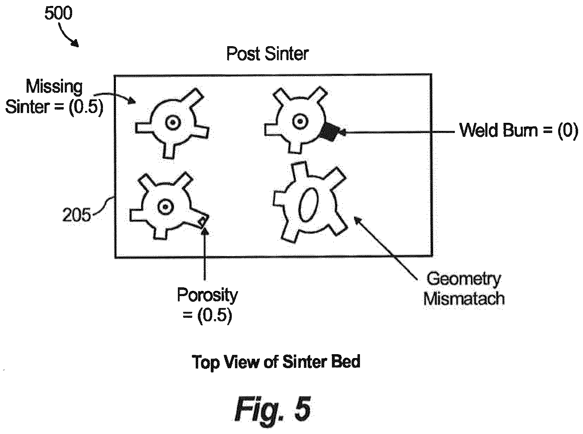

Referring additionally to Fig. 5, determining the quality 105 includes determining if an additively manufactured product includes one or more of burned material (e.g., as shown in the upper right of Fig. 5), excessive porosity (e.g., as shown in the lower left of Fig. 5), missing portions (e.g., as shown in the upper left of Fig. 5), or is not shaped properly (e.g., as shown in the lower right of Fig. 5). As shown, an image 500 shows four scenarios as described above post-sinter.

In certain embodiments, determining the quality 105 includes correlating the reflectance data with reference build location data for the additively manufactured product. This can allow the locations and qualities of the additively manufactured products in the images to be monitored. In this respect, the controller 209 can determine in which coordinates/ranges thereof to look at reflectance data.

Referring to Fig. 2, the system 200 can include a controller 209 and can be operatively connected to the recoater 201 and the imaging device 207 to determine if an incomplete recoat has occurred and to cause the recoater 201 to provide another coat of powder to the build area 205. The controller 209 can also be operatively connected to the build platform 205 to control the height thereof. The controller 209 can also be operatively connected to a laser to control sintering of powder on the build area 205.

One having ordinary skill in the art would appreciate that controller 209 can be configured to control an additive manufacturing process in any suitable respect. The controller 209 can also be configured to execute non-transitory computer readable instructions stored on a memory thereof. The computer readable instructions can include any suitable method or portion thereof as described herein above.

Table 1 below shows some example embodiments of determined reflectance values after certain actions, the likely cause, and embodiments of feedback from the controller 209.

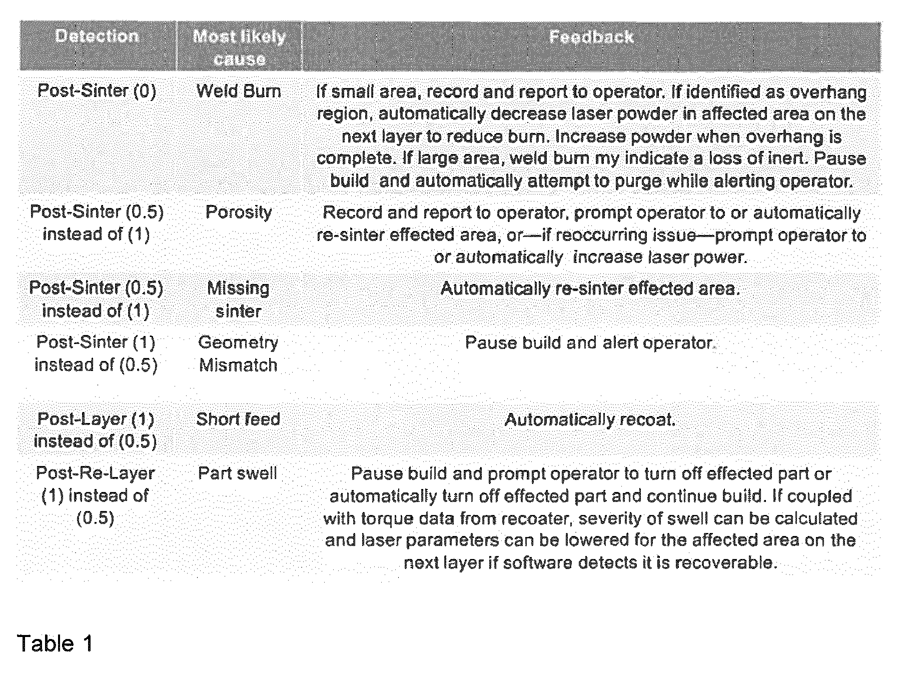

As described above, by using an optical camera (e.g., visible light camera) in the system 200, high resolution photos can be captured and processed post-sinter and post-layering to monitor for quality. Images can be converted to greyscale to simplify assessment for contrast/darkness. With currently available high resolution visible light cameras, quality can be monitored down to 0.003 inches (76 µm), for example.

By checking the image post-layering, the lack of reflecting material ensures effective recoating. The images will be processed immediately after capture and the information will be used to either alert the operator of an issue or to automatically take action depending on the severity of the abnormality.

In-process monitoring as described herein is less data-intensive and more practical for production settings as compared to traditional techniques. Monitoring visual data, for example, can give simple but important information to alert the user or the machine of irregular build activities.

The methods and systems of the present disclosure, as described above and shown in the drawings, provide for additive manufacturing systems with superior properties including improved quality control. While the apparatus and methods of the subject disclosure have been shown and described with reference to embodiments, those skilled in the art will readily appreciate that changes and/or modifications may be made thereto without departing from the spirit and scope of the subject disclosure.

## Claims

1. A method, comprising:
receiving an image from an optical imaging device disposed in operative communication with an additive manufacturing machine, wherein the image includes at least part of a build area of the additive manufacturing machine;
determining a reflectance of at least a portion the build area based on the image to create reflectance data; and
determining a quality of one or more of an additive manufacturing process and/or product based on the reflectance data.

2. The method of claim 1, further comprising converting the image to greyscale if the image is not in greyscale.

3. The method of claim 1 or claim 2, wherein determining the reflectance includes determining a contrast or darkness of at least a portion of the build area in the image.

4. The method of claim 3, wherein determining the reflectance includes determining the contrast or darkness for discrete pixels or groups of pixels of the image.

5. The method of claim 4, wherein determining the reflectance includes assigning a reflectance value to each pixel or each groups of pixels based on the contrast or darkness thereof to create the reflectance data.

6. The method of any preceding claim, wherein determining the quality includes comparing the reflectance data with reference data to determine whether the reflectance data is within a predetermined range of the reference data.

7. The method of any preceding claim, wherein determining the quality includes determining if a powder recoat on the build area is incomplete.

8. The method of claim 7, further comprising one or more of alerting a user or causing the additive manufacturing machine to recoat the build area.

9. The method of any preceding claim, wherein determining the quality includes determining if an additively manufactured product includes one or more of burned material, excessive porosity, missing portions, or is not shaped properly.

10. The method of any preceding claim, wherein determining the quality includes correlating the reflectance data with reference build location data for the additively manufactured product.

11. A system, comprising:
an optical device; and
a controller configured to control an additive manufacturing process and to execute non-transitory computer readable instructions stored on a memory thereof, the computer readable instructions including a method as claimed in any preceding claim.
